# EUROPEAN PATENT SPECIFICATION

(11) **EP 0 644 666 B1**
(45) Date of publication and mention of the grant of the patent: **01.08.2001**
(21) Application number: 94103788.9
(22) Date of filing: 11.03.1994
(51) Int. Cl.: H04B 5/00, H04H 1/00

(54) **Medium-frequency radio transmission system**
Mittelfrequenzrundfunkübertragungssystem
Système de transmission radio à ondes moyennes

(30) Priority: 21.09.1993 JP 23489293; 06.12.1993 JP 30553793
(43) Date of publication of application: 22.03.1995
(73) Proprietor: NHK INTEGRATED TECHNOLOGY INC., Tokyo (JP); NIPPON HOSO KYOKAI, Tokyo 150 (JP)
(72) Inventor: Sugita, Tadao, c/o NHK Integrated Tech. Inc., Tokyo (JP); Toyosawa, Tatehiko, c/o NHK Integrated Tech. Inc., Tokyo (JP); Shoji, Kazumi, c/o NHK Integrated Tech. Inc., Tokyo (JP); Watanabe, Shinich, c/o NHK Integrated Tech. Inc., Tokyo (JP); Fujiwara, Atsumi, c/o Nippon Hoso Kyokai, Naka-Ku, Hiroshima City, Hiroshima Pref. (JP); Kitanda, Masaaki, c/o Nippon Hoso Kyokai, Naka-Ku, Hiroshima City, Hiroshima Pref. (JP)
(74) Representative: Lehn, Werner, Dipl.-Ing.

(56) References cited:
- EP-A- 0 225 607
- AT-B- 36 626
- CH-A- 612 552
- DE-A- 3 036 358
- GB-A- 1 389 554
- US-A- 4 476 574

## Description

### BACKGROUND OF THE INVENTION

### Field of the Invention

The present invention relates to a medium-frequency radio transmission system for enabling to listen to an AM medium-frequency radio within broadcast wave closed areas such as underground shopping malls, underground parking lots, underground connection passage, underground railways, automobile road tunnels or deep spaces of massive buildings (hereinafter referred to as "tunnel" or "basement" for the sake of explanation).

### Description of the Related Art

In case of receiving an AM radio wave at the rooftop of an existing high-storied building and transmitting the received radio wave to a basement, prior art has newly built a coaxial cable for transmitting a medium-frequency radio from the rooftop to the basement within the existing building.

Moreover, in order to reradiate a wave, there was required construction work such as a new inductive line stretched on the wall surface.

In the prior art, said construction should be executed within the existing building, generally difficult works were accompanied and a large amount of expenses were required.

US-A-4 476 574 describes a radio communication system for use in tunnels, mines, buildings or other shielded locations in which a pair of radiating transmission lines extend through such location in spaced coextensive relation to each other. The system described here uses a high frequency in the range of 150 MHz, 170 MHz for the transmission, as well as a transmission line of balanced twin lead lines of 300 Ω together with an interposing of amplifiers of 33 dB gain in each 800 feet, whereby signals are transmitted in unilateral direction. In the opposite direction a similar transmission line is set with a few feet distance between the two transmission lines, wherein the coupling loss of 45 dB order is maintained. Thus, a couple of mobile transceivers between two transmission lines can communicate with each other by using the two transmission lines in bilateral directions. An example is described, where the receiving antenna receives a frequency of 160 MHz from a mobile radio system. The receiving frequency of another transceiver is 80 MHz and the transmitting frequency is 72 MHz. In a system for mobile transceivers in mines by using three frequencies, the system uses an intermediate frequency of 455 KHz for taking a translated signal back to the base station from the opposite end of the transmission lines. Furthermore, this document describes a single-line transmission system where a feederline configuration having particular openings in the transmission line is used for radiation. A balun provides a suitable impedence matching between a coaxial line and the twin line, all this taking place at the frequency range of 150 to 170 MHz. Therefore, the balun is neither used for a radiation nor used for a coupling of circuits.

### SUMMARY OF THE INVENTION

An object of the present invention, therefore, is to provide a system and a method for medium-frequency radio transmission , especially a system and a method for a medium-frequency radio transmission into a tunnel, which can couple a medium-frequency radio to existing distributing cables (i.e., electric lines, telephone lines, MATV (Master-Antenna TV) coaxial cables and the like) or distributing conductive pipings via couplers and transmit to further pick the radio again by the couplers at the basement or tunnel.

This object is solved by a medium-frequency radio transmission system (claim 1) for radiating medium-frequency radio waves in a range of 100 KHz and 5 MHz to a predetermined floor of a building, comprising:
a receiving antenna for receiving an amplitude-modulated medium-frequency radio wave, installed at the rooftop of the building; a distribution cable or a distributing conductive piping; a loop-like line; a first coupler for coupling said radio wave from said antenna to said distribution cable or distributing conductive piping; a pair of second and third couplers combined with an interconnection line for linking the radio wave with said loop-like line; wherein said distribution cable or said distributing conductive piping is adapted in a loop-like circuit such that said coupled radio wave is transmitted to said predetermined floor, and the radio wave is reradiated from the loop-like line at the predetermined floor.

Furthermore, this object is solved by a medium-frequency radio transmission system (claim 5) for radiating medium-frequency radio waves in the range of 100 KHz and 5 MHz into a tunnel, comprising: a receiving antenna for receiving an amplitude-modulated medium-frequency radio wave, installed at an upper portion of ground facilities outside said tunnel; a first wiring or piping; a first coupler for coupling said radio wave from said antenna to said first wiring or piping; a second linear wiring or piping arranged within said tunnel of the predetermined underground facilities; feeding means including a second coupler for feeding the radio wave from the first wiring or piping to said second linear wiring or piping; wherein said first wiring or piping is adapted in a loop-like circuit such that the received radio wave is transmitted to said predetermined underground facilities, and said second wiring or piping is adapted in a radiating antenna such that the received radio wave is reradiated into said tunnel.

The object is also solved by a method of providing for medium-frequency radio wave transmission and reradiation in existing buildings and the like (claim 10), comprising the following steps: receiving an amplitude-modulated medium-frequency radio wave by a receiving antenna installed at the rooftop of an existing building; coupling the received medium-frequency radio wave to an existing distribution cable or distributing conductive piping by a first coupler for said radio wave; transmitting the radio wave along said distribution cable or distributing conductive piping to a predetermined floor, wherein said distribution cable or said distributing conductive piping is adapted in a loop-like circuit; linking the transmitted radio wave at the predetermined floor with an existing or new loop-like line via a pair of couplers composed of a second coupler and a third coupler combined with an interconnection line at the predetermined floor; and reradiating said medium-frequency radio wave from the loop-like line for enabling to listen to an amplitude-modulated medium-frequency radio broadcasting program in an objective area of the predetermined floor.

Furthermore, this object is solved by a method (claim 13) of providing for medium-frequency radio wave transmission and redadiation in tunnels and the like, comprising the following steps: receiving an amplitude-modulated medium-frequency radio wave by a receiving antenna installed at an upper portion of ground facilities outside said tunnel; coupling the received medium-frequency radio wave to an existing distribution cable or distributing conductive piping by a first coupler for said radio wave, wherein said first wiring or piping is adapted in a loop-like circuit; transmitting the radio wave along said distribution cable or distributing piping to a predetermined underground facilities; feeding the transmitted radio wave via a second coupler of a feeding means at the predetermined underground facilities to an existing linear wiring or conductive piping arranged within said tunnel of the predetermined underground facilities; and reradiating said medium-frequency radio wave from said existing linear wiring or conductive piping for enabling to listen to an amplitude-modulated medium-frequency broadcasting program within the tunnel of the predetermined underground facilities.

A first system for transmitting medium-frequency radio wave according to one aspect of the invention comprises installing a receiving antenna for receiving an amplitude-modulated medium-frequency radio wave at the rooftop of an existing building, receiving said medium-frequency radio wave, coupling the received medium-frequency radio wave to an existing distributing cable or distributing conductive piping by a coupler for said radio wave, and transmitting the radio wave to a predetermined floor.

A preferred aspect of the present invention is characterized by coupling said medium-frequency radio wave transmitted to said predetermined floor to an existing or new loop-like line via further another pair of said radio wave couplers and reradiating said medium-frequency radio wave from its loop-like line for enabling to listen to the amplitude-modulated medium-frequency radio broadcasting at the predetermined floor.

A second system for transmitting medium-frequency radio wave according to another aspect of the invention comprises receiving a medium-frequency radio wave by installing a receiver antenna for receiving an amplitude-modulated medium-frequency radio wave at the top of an existing building or at the upper portion of ground facilities, coupling the received medium-frequency radio wave to existing wiring or piping by a coupler for the medium-frequency radio wave, transmitting the wave to a predetermined underground basement or tunnel, feeding the transmitted medium-frequency radio wave to existing linear wiring or piping within an underground basement or a tunnel, and reradiating the medium-frequency radio wave from the radio wave current-fed linear wiring or piping.

A third system for transmitting medium-frequency radio wave, especially into a tunnel, according to another aspect of the invention comprises receiving a medium-frequency radio wave by installing a receiver antenna for receiving an amplitude-modulated medium-frequency radio wave at the upper portion of ground facilities, feeding the received medium-frequency radio wave to existing wiring or piping within a tunnel via a booster including at least one phase-shift means for an amplitude-modulated radio wave, and reradiating the medium-frequency radio wave from the radio wave current-fed wiring or piping.

In any respect the present invention has such advantages that engineering work becomes simple and expenditure can be curtailed drastically with the aid of existing distributing cables or distributing conductive pipings of an existing building for transmitting radio waves, for example, with the aid of loop-like lines or linear wiring by utilizing the existing distributing cables and distributing conductive pipings according to circumstances with respect to reradiation at the underground basement or tunnel, because there is no need to construct any new coaxial cable or to newly stretch any inductive line on the wall surface.

Further advantageous embodiments and improvements of the invention can be taken from the dependent claims. Hereinafter the invention will be described with reference to the attached drawings.

### Brief Description of the Drawing(s)

Fig. 1 shows a schematic diagram of a first embodiment relating to the transmission system of the present invention;
Fig. 2 shows a construction of a coupler relating to the transmission system of the present invention;
Fig. 3 shows a schematic diagram explaining a second embodiment of the present invention; and
Fig. 4 is a schematic diagram explaining a third embodiment of the present invention.

1 is a radio receiving antenna, 2 is an AM booster, 3-1, 3-2 are couplers, 4 is an MATV (Master-Antenna TV) booster, 5 is an existing coaxial cable, 6 is an MATV front end, 7-1, 7-2 are loop-like lines, 8 is a primary line, 9 is a secondary line, 10-1, 10-2 are ferrite cores, 21 is a medium-frequency radio receiving antenna, 22 is a booster, 23-1, 23-2 are couplers, 24 is an existing coaxial cable, 25 is an MATV booster, 26 is an MATV front end, 27 is a commercial electrical source, 28 is a high-tension transformer, 29 is an earth, 30 is a switchboard, 31 is a condenser, 32 is a contact, 33 is a tunnel, 34 is a lighting lamp wiring, 35 is a lighting lamp, 51 is a medium-frequency radio receiving antenna, 52 is a feeder, 53 is a booster, 54 is a tunnel, 55 is a lighting lamp, 56 is a phase shifter, 57 is a level regulator and 58 is an impedance matching device.

### Description of the Preferred Embodiment

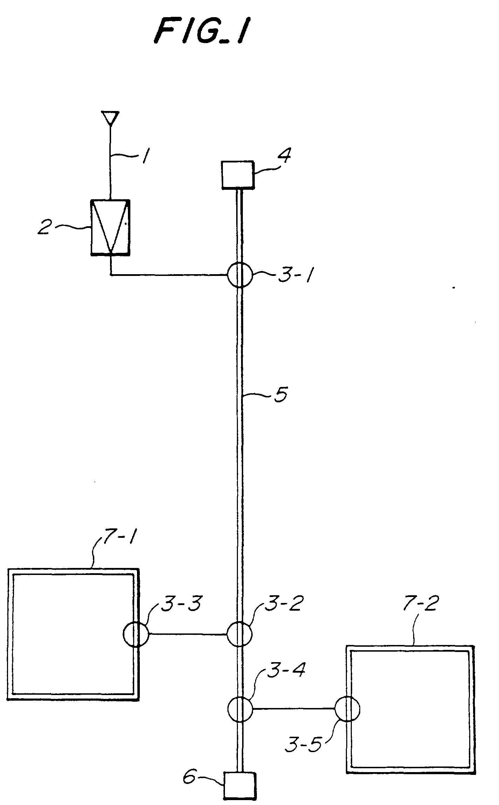

Fig. 1 shows a schematic diagram of an embodiment relating to the transmitting system of the present invention.

In Fig. 1, an antenna 1 is for receiving an amplitude-modulated medium-frequency radio, and in the system of the present invention, the antenna 1 is newly provided at the rooftop of a predetermined existing building. A wave received by this antenna 1 is amplified to a sufficiently high level by a booster 2. In this embodiment, the amplified wave is coupled to outer conductor of an existing MATV coaxial cable (5C-2V 150m) 5 via a coupler 3-1 which will be explained later on. In this case, the cable 5 shown herein is not limited but may preferably be any electric lines such as lamp lines, telephone lines and the like, and may be a conductive distributing piping, if circumstances require.

One thing to give attention is that this wiring or piping 5 becomes a secondary line of a coupler 3-1 which will be explained later on, so that it is necessary to pay attention to form a loop-like circuit including ground lead wirings and floating capacitance with the ground, for a medium-frequency radio wave of frequency aimed at. When the cable 5 is an MATV coaxial cable as in this embodiment, its outer conductor is commonly earthed at an MATV booster 4 at the rooftop and a front end 6 at the basement, respectively, so that the secondary line of a coupler advantageously becomes loop-like circuit by the outer conductor of the cable and ground.

In this embodiment, a loop 7-1 is a loop-like line constructed by utilizing an existing exhaust duct at the ceiling of an underground parking lot, and flows a medium-frequency radio wave by coupling the medium-frequency radio wave taken out of a coaxial line by a coupler 3-2 to the loop-like line 7-1 again by a coupler 3-3. Thereby a good medium-frequency radio can be audible even in the underground parking lot of the existing building.

According to the present system the loop-like line 7 can flow a medium-frequency radio wave to not only one loop like line 7-1 but also to a plurality of loops such as a loop 7-2. It was confirmed as a result of the experiment that a wave can smoothly be transmitted up to about 10 km total length of the loop line.

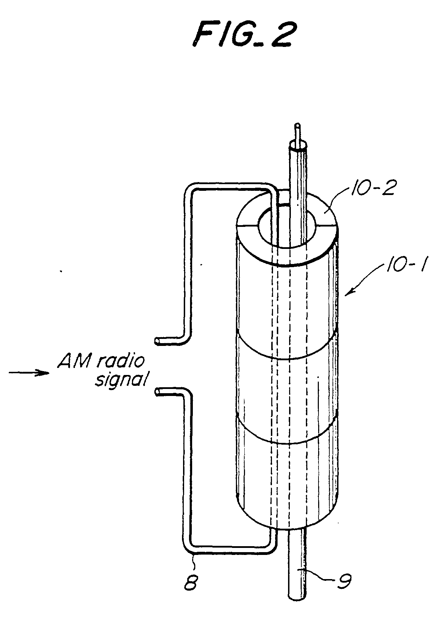

Fig. 2 shows one embodiment of a coupler construction, in which two U-shaped ferrite cores 10-1 and 10-2 sandwich a primary line 8 and a secondary line 9 such as an existing coaxial cable and the like so as . to couple a medium-frequency radio wave to the primary and secondary lines, and in the experiment, the ferrite core is 13 mmφ in inner diameter, 26 mmφ in outer diameter and 28 mm in longitudinal length, 6-10 of which are used.

An embodiment of the present system was explained by referring to Figs. 1 and 2, but the present invention is not limited thereto, but can be deformed and changed within the scope of the invention specified in claims. For example, a floor of the building which the present invention is applied to is not limited to the basement, but can be applied to the deep space of a massive building, that is, any floor above the ground, and the coaxial cable 5 for transmitting a received wave from the rooftop to a predetermined floor of an existing building is not limited to an MATV cable shown in Fig. 1, but may be any cable such as lamp line, telephone line and the like, and may preferably be a conductive distributing piping, if circumstances require. Moreover, the loop-like line 7 is not limited to the existing distributing cable and distributing conductive piping, but can utilize conductive structure and equipments.

In addition, a medium-frequency wave frequency of the present system is about from 100 kHz to 5 MHz.

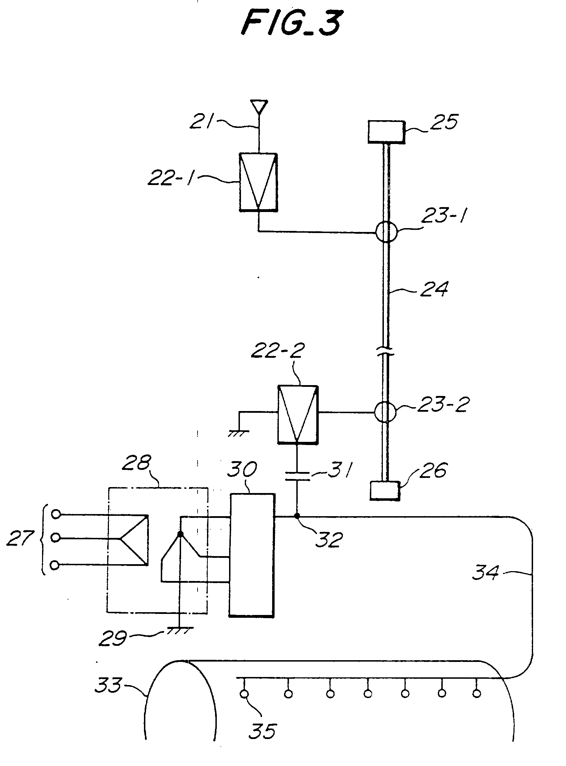

Fig. 3 shows a second embodiment relating to the system according to the present invention, that is, a schematic diagram when radiation of a radio wave at the underground utilizes a conductive lamp wire already substantially linearly arranged within a tunnel.

A tunnel 33 shown here can concretely be imagined as the inside of a tunnel with an underground railway or the inside of an automobile road tunnel or the substantially linear passageway or pedestrian underground passage way of an underground shopping mall, and the place for laying a receiver antenna 21 to be utilized in this case can be imagined as a station building along an underground railway, an automobile road tunnel or any building in the vicinity of an entrance and exit of a pedestrian underground passage.

In Fig. 3, the antenna 21 is an antenna for receiving amplitude-modulated medium-frequency radio, and this antenna 21 is newly provided on the rooftop of a predetermined existing building in the present invention. A radio wave received by this antenna 21 is then amplified to a sufficiently high level by a booster 22-1. The thus amplified radio wave is coupled to outer conductor of an existing MATV coaxial cable (5C-2V) 24 in this embodiment by a coupler 23-1. In this case, the cable 24 shown here is not limited, but may preferably be any cable such as lamp line, telephone line and the like connected into the above-described tunnel, and conductive piping according to circumstances.

One thing to give attention is that this wiring or piping becomes a secondary line of a coupler 23-1, so that it is necessary to pay attention to form a loop-like circuit including ground lead wirings and floating capacitance with the ground, for a medium-frequency radio wave of frequency aimed at. When the cable 24 is an MATV coaxial cable as in the embodiment illustrated in Fig. 3, its outer conductors are earthed at an MATV booster 25 at the rooftop and a front end 26 at the underground, respectively, so that the secondary line of a coupler advantageously becomes loop-like circuit by the outer conductor of the cable and ground.

The medium-frequency radio wave introduced into a predetermined ground from the rooftop is radiated within a tunnel via a linear lighting lamp wiring already laid within the tunnel. That is, the radio wave derived from the vicinity of the underground end portion of the cable 24 illustrated in Fig. 3 by another coupler 23-2 is again amplified by another booster 22-2, and fed to a wiring 34 for a tunnel lighting lamp 35, which is prepared in order to a commercial electrical source 27 (such as 6600 V, 3 phase), a high-tension transformer 28 (dropping to 200 V, 3 phase) and a switchboard 30, at a contact point 32 of the wiring via a condenser 31. Radiation type of the radio wave from the lighting lamp wiring 34 in this case is considered to lay a vertical linear transmitter antenna, which is in use for ordinary transmission of medium-frequency radio, on exactly horizontal side, and radiation efficiency is deteriorated as compared with a vertical antenna, but electromagnetic field intensity sufficient enough to listen to medium-frequency radio within a tunnel can be obtained.

Thus, the medium-frequency radio within a tunnel becomes audible by a radio wave radiated by the lighting lamp wiring 34, and as a result of the experiment, it was confirmed that the above wiring 34 can well transmit a radio wave to about 1 km.

In case of utilizing a lighting lamp wiring 34 via a switchboard 30 for radiation as illustrated in Fig. 3 of the present invention, there is no problem when an electric current is applied via the switchboard (because of an earth on the primary side), but when a switch of the switchboard 30 is cut off to become nonconductive, only the following wiring 34 after that cannot constitute a loop-like line. Therefore, the coupling system corresponding to the coupler 3-3 illustrated in Fig. 1 cannot be used. The present inventors have assumed such a case and proposed to feed a radio wave to a radiation line via a condenser 31 as in the present invention.

In case of utilizing a ladder for loading lines already substantially linearly arranged within a tunnel for radiation of a radio wave under the ground becomes to be simplified. A schematic diagram of this case is not illustrated, but its explanation is simple, and the ladder itself is not active, so that it is possible to feed the radio wave current by directly connecting an output line of the booster 22-2 illustrated in Fig. 3 to one end of the ladder without passing through a condenser 31.

Moreover, when the place for setting the antenna 21 and the booster 22-1 is close to a feeder point within the tunnel, it is possible to further omit a transmission line 24 and to directly feed the radio wave current from the output of the booster 22-1 to a radiation conductor within the tunnel.

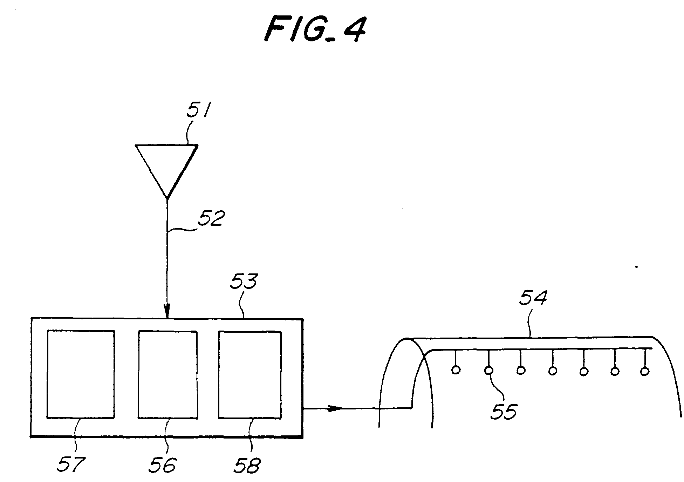

A third embodiment of the present invention is a case of reradiating a medium-frequency radio wave within a tunnel such as a highway road as shown in Fig 4. A receiver antenna 51 is placed on the ground above the tunnel or the rooftop of a near building. An output of the antenna 51 is connected to a reradiation booster 53 via a feeder 52, an output of the booster 53 is coupled to an existing lighting cable 55, fire-extinguishing piping or conduit piping and the like within a tunnel 54, and a radio wave within the tunnel 54 is reradiated. In the booster 53 is provided at least one phase shifter or delay line 56 for an amplitude-modulated radio wave, and preferably provided a phase shifter 56, a level regulator 57 and an impedance matching device 58 by every channel of radio waves. As the phase shifter or delay line, use is made of lumped-constant network such as L, C and the like, any known method can be carried out, and delay elements such as SAW, CCD and the like can be used.

Some place for setting a receiver antenna 51 receives even a reradiation wave and causes oscillation, and some place within a tunnel admixes a direct wave and a reradiation wave. Giving the optimum phase shift to the reradiation wave, the oscillation is prevented and radio wave field distribution within the tunnel is optimized. It is preferable to carry out at every channel, and level regulation 57 is further carried out, and an output of the booster 53 is coupled by impedance matching 58 to the existing cable under the optimum impedance matching condition. Thereby, good medium-frequency reception within the tunnel becomes possible. As a result of the experiment, it was confirmed that when the output of the booster 53 is 0.2 watt, medium-frequency radio is excellently received over the whole tunnel of 750 m in length.

Some embodiments of the present invention were explained by referring to Figs. 3 and 4, but the present invention is not limited to these embodiments, but can be modified and changed within the scope of the invention specified in claims. For example, when a wave energy is large at the point of the coupler 23-2 illustrated in Fig. 3 and a booster 22-2 need not use, the booster 22-2 can be omitted.

As explained above, the prior art required to newly construct a coaxial cable and the like for transmitting a medium-frequency radio wave within a wave closed area such as an underground shopping mall, and further required difficult works and a large amount of expenses, but in the system according to the present invention, the existing distributing cables and distributing conductive piping for transmission are used, no construction of coaxial cables and the like is required, and it has a great deal of economic effect.

Moreover, the medium-frequency wave coupler shown herein employs a method of sandwiching distributing cables with U-shaped ferrite cores, so that works can be simplified such that works can be continued as the existing distributing cables are active. Thus an economic effect is high from this point of view.

In order to newly lay an inductive line for reradiating a medium-frequency radio wave within the already existing underground railway or automobile road tunnel, the prior art disadvantageously requires complicated and difficult works and a great amount of expenses. Particularly, work at the high place within a tunnel at mid-night or traffic control requires a number of maintenance personnels whose expenses boomerang on every cost. Contrary to the above, the present invention utilizes existing lines, piping and the like, so that a tremendous economical effect can be expected.

Furthermore, according to the system of the present invention, it becomes possible to easily listen a medium-frequency radio broadcast within broadcast wave closed areas such as underground shopping malls, underground parking lots, underground connection passages, underground railways, tunnels or deep spaces of massive buildings, and social public convenience can greatly be exhibited at not only daily broadcast service but also emergency.

## Claims

1. A medium-frequency radio transmission system for radiating medium-frequency radio waves in the range of 100 KHz to 5 MHz to a predetermined floor of a building, comprising:
**(a)** a receiving antenna (1) for receiving an amplitude-modulated medium-frequency radio wave, installed at the rooftop of the building;
**(b)** a distribution cable (5) or a distributing conductive piping;
**(c)** a loop-like line (7-1, 7-2);
**(d1)** a first coupler (3-1) for coupling said radio wave from said antenna (1) to said distribution cable (5) or distributing conductive piping;
**(d2)** a pair of second and third couplers (3-2, 3-3; 3-4, 3-5) combined with an interconnection line for linking the radio wave with said loop-like line (7-1, 7-2) ;
wherein
**(e)** said distribution cable (5) or said distributing conductive piping is adapted in a loop-like circuit (5) such that said coupled radio wave is transmitted to said predetermined floor, and the radio wave is reradiated from the loop-like line (7-1, 7-2) at the predetermined floor.

2. A medium-frequency radio transmission system according to claim 1, wherein a plurality of said pair of second and third couplers (3-2, 3-3; 3-4, 3-5) connect the amplitude-modulated medium-frequency radio wave to a plurality of said loop-like lines (7-1, 7-2), respectively.

3. A medium-frequency radio transmission system according to claims 1 and 2, wherein each of said couplers (3-2, 3-3; 3-4, 3-5) comprises a ferrite core holding a primary line (8) and a secondary line (9) therebetween.

4. A medium-frequency radio transmission system according to claims 1 to 3, wherein a booster (2) for amplifying said received medium-frequency radio wave and for coupling said received and amplified medium-frequency radio wave to said distribution cable (5) or distributive conductive piping, said booster comprising at least one phase-shift means (56) for an amplitude-modulated medium-frequency radio wave to prevent oscillation.

5. A medium-frequency radio transmission system for radiating medium-frequency radio waves in the range of 100 KHz to 5 MHz into a tunnel (33), comprising:
**(a)** a receiving antenna (21) for receiving an amplitude-modulated medium-frequency radio wave, installed at an upper portion of ground facilities outside said tunnel (33);
**(b)** a first wiring (24) or piping;
**(c)** a first coupler (23-1) for coupling said radio wave from said antenna (21) to said first wiring (24) or piping;
**(d)** a linear second wiring (34) or piping arranged within said tunnel (33) of predetermined underground facitilies;
**(e)** feeding means (23-2, 22-2, 31, 32) including a second coupler (23-2) for feeding the radio wave from the first wiring (24) or piping to said linear second wiring or piping (34); wherein
**(f)** said first wiring or piping (24) is adapted in a loop-like circuit (5) such that the received radio wave is transmitted to said predetermined underground facilities, and said second wiring or piping (34) is adapted in a radiating antenna such that the received radio wave is reradiated into said tunnel (33).

6. A medium-frequency radio transmission system according to claim 5, wherein said linear second wiring (34) or piping is active, and the radio wave current is fed thereto via a condensor (31).

7. A medium-frequency radio transmission system according to claim 5, wherein said linear second wiring (34) or piping is not active, and the radio wave current is directly fed (32) thereto.

8. A medium-frequency radio transmission system according to claims 5 to 7, wherein said first and second couplers (32-1, 32-2) are a ferrite core holding a primary line (8) and a secondary line (9) therebetween.

9. A medium-frequency radio transmission system according to claim 5, wherein a first booster (22-1) including a phase shifter (56) for preventing oscillation, for amplifying said received medium-frequency radio wave wherein said first coupler (32-1) couples said received and amplified medium-frequency radio wave from said first booster (22-1) to said first wiring (24) or piping;
said second coupler (23-2) of said feeding means (23-2, 22-2, 31, 32) feeding the transmitted medium-frequency radio wave from said first wiring (24) or piping to a second booster (22-2); and
said second booster (22-2) including a phase shifter (56) for preventing oscillation, amplifying said transmitted medium-frequency radio wave, and feeding the amplified medium-frequency radio wave to said existing linear wiring (34) or conductive piping.

10. A method of providing for medium-frequency radio wave transmisssion and reradiation in existing buildings and the like, comprising the steps of:
**(a)** receiving an amplitude-modulated medium-frequency radio wave by a receiving antenna installed at the rooftop of an existing building;
**(b)** coupling the received medium-frequency radio wave to an existing distribution cable (5) or distributing conductive piping by a first coupler (3-1) for said radio wave;
**(c)** transmitting the radio wave along said distribution cable (5) or distributing conductive piping to a predetermined floor, wherein said distribution cable (5) or said distributing conductive piping is adapted in a loop-like circuit (5) ;
**(d)** linking the transmitted radio wave at the predetermined floor with an existing or new loop-like line (7-1 or 7-2) via a pair of couplers composed of a second coupler (3-2 or 3-4) and a third coupler (3-3 or 3-5) combined with an interconnection line at the predetermined floor; and
**(e)** reradiating said medium-frequency radio wave from the loop-like line (7-1 or 7-2) for enabling to listen to an amplitude-modulated medium-frequency radio broadcasting program in an objective area of the predetermined floor.

11. A method according to claim 10, wherein said couplers (3-1; 3-2, 3-3; 3-4, 3-5) comprise ferrite cores (10-1, 10-2) holding a primary line (8) and a secondary line (9) therebetween.

12. A method according to claim 10, comprising, after said step (a),a step of amplifying said medium-frequency radio wave via a booster (2) including a phase shifter (56) for preventing oscillation, wherein in said step (b) said received and amplified medium-frequency radio wave from said booster (2) is coupled to said existing distribution cable (5) or distributing conductive piping by said first coupler (3-1).

13. A method of providing for medium-frequency radio wave transmisssion and reradiation in tunnels and the like, comprising the steps of:
**(a)** receiving an amplitude-modulated medium-frequency radio wave by a receiving antenna installed at an upper portion of ground facilities outside said tunnel (33);
**(b)** coupling the received medium-frequency radio wave to an existing distribution cable (24) or distributing conductive piping by a first coupler (23-1) for said radio wave, wherein said first wiring or piping (24) is adapted in a loop-like circuit (24);
**(c)** transmitting the radio wave along said distribution cable (24) or distributing piping to a predetermined underground facilities
**(d)** feeding the transmitted radio wave via a second coupler (32-2) of a feeding means (23-2, 22-2, 31, 32) at the predetermined ground facility to an existing linear wiring (34) or conductive piping arranged within said tunnel (33) of the predetermined ground facilities; and
**(e)** reradiating said medium-frequency radio wave from said existing linear wiring (34) or conductive piping for enabling to listen to an amplitude-modulated medium-frequency broadcasting program within the tunnel (33) of the predetermined underground facilities.

14. A method according to claim 13, wherein said couplers (23-1, 23-2) comprise ferrite cores (10-1, 10-2) holding a primary line (8) and a secondary line (9) therebetween.

15. A method according to claim 13, comprising the following steps:
after said step (a), amplifying said medium-frequency radio wave via a first booster (22-1) including a phase shifter (56) for preventing oscillation, wherein in said step (b) said received and amplified medium-frequency radio wave from said first booster (22-1) is coupled to said existing distribution cable (24) or distributing conductive piping by said first coupler (32-1); and
in said step (d), coupling the transmitted radio wave via said second coupler (23-2) of said feeding means (23-2, 22-2, 31, 32) at the predetermined underground facilities to a second booster (22-2) including a phase shifter (56) for preventing oscillation, and feeding the transmitted medium-frequency radio wave from said second booster (22-2) to said existing linear wiring (34) or cunductive piping.

16. A method of providing for medium-frequency radio wave transmission and reradiation in tunnels according to claim 15, wherein said medium-frequency radio wave current output from said second booster (22-2) is fed to said linear wiring (34) or conductive piping via a condenser (31) of said feeding means (23-2, 22-2, 31, 32).

## Patentansprüche

1. Funkübertragungssystem mittlerer Frequenz zum Ausstrahlen von Funkwellen mittlerer Frequenz im Bereich von 100 kHz bis 5 MHz zu einem vorbestimmten Stockwerk eines Gebäudes, welches System folgendes aufweist:
(a) eine Empfangsantenne (1) zum Empfangen einer amplitudenmodulierten Funkwelle mittlerer Frequenz, welche Antenne auf dem Dach des Gebäudes installiert ist;
(b) ein Verteilungskabel (5) oder ein Verteilungs-Leitungsrohr;
(c) eine schleifenartige Leitung (7-1, 7-2);
(d1) einen ersten Koppler (3-1) zum Koppeln der Funkwelle von der Antenne (1) zum Verteilungskabel (5) oder zum Verteilungs-Leitungsrohr;
(d2) ein Paar von zweiten und dritten Kopplern (3-2, 3-3; 3-4, 3-5), die mit einer Verbindungsleitung zum Verbinden der Funkwelle mit der schleifenartigen Leitung (7-1, 7-2) kombiniert sind;
wobei
(e) das Verteilungskabel (5) oder das Verteilungs-Leitungsrohr in einer schleifenartigen Schaltung (5) so angepaßt ist, daß die gekoppelte Funkwelle zum vorbestimmten Stockwerk übertragen wird, und die Funkwelle von der schleifenartigen Leitung (7-1, 7-2) auf dem vorbestimmten Stockwerk zurückgestrahlt wird.

2. Funkübertragungssystem mittlerer Frequenz nach Anspruch 1, wobei eine Vielzahl des Paars von zweiten und dritten Kopplern (3-2, 3-3; 3-4, 3-5) die amplitudenmodulierte Funkwelle mittlerer Frequenz jeweils mit einer Vielzahl der schleifenartigen Leitungen (7-1, 7-2) verbinden.

3. Funkübertragungssystem mittlerer Frequenz nach den Ansprüchen 1 und 2, wobei jeder der Koppler (3-2, 3-3; 3-4, 3-5) einen Ferritkern aufweist, der eine primäre Leitung (8) und eine sekundäre Leitung (9) dazwischen hält.

4. Funkübertragungssystem mittlerer Frequenz nach den Ansprüchen 1 bis 3, wobei eine Spannungserhöhungseinheit bzw. ein Verstärker (2) zum Verstärken der empfangenen Funkwelle mittlerer Frequenz und zum Koppeln der empfangenen und verstärkten Funkwelle mittlerer Frequenz zum Verteilungskabel (5) oder zum verteilenden leitenden Rohr vorgesehen ist, wobei der Verstärker wenigstens eine Phasenverschiebungseinrichtung (56) für eine amplitudenmodulierte Funkwelle mittlerer Frequenz aufweist, um eine Oszillation zu verhindern.

5. Funkübertragungssystem mittlerer Frequenz zum Ausstrahlen von Funkwellen mittlerer Frequenz im Bereich von 100 kHz bis 5 MHz in einen Tunnel (33), welches System folgendes aufweist:
(a) eine Empfangsantenne (21) zum Empfangen einer amplitudenmodulierten Funkwelle mittlerer Frequenz, welche Antenne an einem oberen Teil von oberirdischen Einrichtungen außerhalb des Tunnels (33) installiert ist;
(b) eine erste Verdrahtung (24) oder ein Rohr;
(c) einen ersten Koppler (23-1) zum Koppeln der Funkwelle von der Antenne (21) zur ersten Verdrahtung (24) oder zum Rohr;
(d) eine lineare zweite Verdrahtung (34) oder ein Rohr, die bzw. das innerhalb des Tunnels (33) angeordnet ist, von vorbestimmten unterirdischen Einrichtungen;
(e) eine Zuführeinrichtung (23-2, 22-2, 31, 32), die einen zweiten Koppler (23-2) zum Zuführen der Funkwelle von der ersten Verdrahtung (24) oder dem Rohr zur linearen zweiten Verdrahtung oder dem Rohr (34) enthält;
wobei
(f) die erste Verdrahtung oder das Rohr (24) in einer schleifenartigen Schaltung (5) so angepaßt ist, daß die empfangene Funkwelle zu den vorbestimmten unterirdischen Einrichtungen übertragen wird, und die zweite Verdrahtung oder das Rohr (34) in einer Strahlungsantenne so angepaßt ist, daß die empfangene Funkwelle in den Tunnel (33) zurückgestrahlt wird.

6. Funkübertragungssystem mittlerer Frequenz nach Anspruch 5, wobei die lineare zweite Verdrahtung (34) oder das Rohr aktiv ist und der Funkwellenstrom über einen Kondensator (31) dorthin zugeführt wird.

7. Funkübertragungssystem mittlerer Frequenz nach Anspruch 5, wobei die lineare zweite Verdrahtung (34) oder das Rohr nicht aktiv ist und der Funkwellenstrom direkt dorthin zugeführt wird (32).

8. Funkübertragungssystem mittlerer Frequenz nach den Ansprüchen 5 bis 7, wobei die ersten und zweiten Koppler (32-1, 32-2) ein Ferritkern sind, der eine primäre Leitung (8) und eine sekundäre Leitung (9) dazwischen hält.

9. Funkübertragungssystem mittlerer Frequenz nach Anspruch 5, wobei ein erster Verstärker (22-1) einen Phasenschieber (56) zum Verhindern einer Oszillation, zum Verstärken der empfangenen Funkwelle mittlerer Frequenz enthält, wobei der erste Koppler (32-1) die empfangene und verstärkte Funkwelle mittlerer Frequenz vom ersten Verstärker (22-1) zur ersten Verdrahtung (24) oder zum Rohr koppelt;
der zweite Koppler (23-2) der Zuführeinrichtung (23-2, 22-2, 31, 32) die gesendete Funkwelle mittlerer Frequenz von der ersten Verdrahtung (24) oder dem Rohr zu einer zweiten Verstärkungseinheit (22-2) zuführt; und
wobei die zweite Verstärkungseinheit (22-2) einen Phasenschieber (56) zum Verhindern einer Oszillation enthält, die gesendete Funkwelle mittlerer Frequenz verstärkt und die verstärkte Funkwelle mittlerer Frequenz zur existierenden linearen Verdrahtung (34) oder zum Leitungsrohr zuführt.

10. Verfahren zum Sorgen für ein Senden und ein Zurückstrahlen in existierenden Gebäuden und ähnlichem einer Funkwelle mittlerer Frequenz, welches Verfahren die folgenden Schritte aufweist:
(a) Empfangen einer amplitudenmodulierten Funkwelle mittlerer Frequenz durch eine auf dem Dach eines existierenden Gebäudes installierte Empfangsantenne;
(b) Koppeln der empfangenen Funkwelle mittlerer Frequenz zu einem existierenden Verteilungskabel (5) oder einem verteilenden leitenden Rohr durch einen ersten Koppler (3-1) für die Funkwelle;
(c) Senden bzw. Übertragen der Funkwelle entlang dem Verteilungskabel (5) oder dem verteilenden leitenden Rohr zu einem vorbestimmten Stockwerk, wobei das Verteilungskabel (5) oder das verteilende leitende Rohr in einer schleifenartigen Schaltung (5) angepaßt ist;
(d) Verbinden der übertragenen Funkwelle auf dem vorbestimmten Stockwerk mit einer existierenden oder einer neuen schleifenartigen Leitung (7-1 oder 7-2) über ein Paar von Kopplern, das aus einem zweiten (3-2 oder 3-4) und einem dritten Koppler (3-3 oder 3-5) zusammengesetzt ist, die mit einer Verbindungsleitung auf dem vorbestimmten Stockwerk kombiniert bzw. verbunden sind; und
(e) Zurückstrahlen der Funkwelle mittlerer Frequenz von der schleifenartigen Leitung (7-1 oder 7-2) zum Ermöglichen, ein amplitudenmoduliertes Rundfunkprogramm mittlerer Frequenz in einem Objektbereich bzw. Objektgebiet des vorbestimmten Stockwerks zu hören.

11. Verfahren nach Anspruch 10, wobei die Koppler (3-1; 3-2, 3-3; 3-4, 3-5) Ferritkerne (10-1, 10-2) aufweisen, die eine primäre Leitung (8) und eine sekundäre Leitung (9) dazwischen halten.

12. Verfahren nach Anspruch 10, das nach dem Schritt (a) einen Schritt zum Verstärken der Funkwelle mittlerer Frequenz über eine Verstärkungseinheit (2) aufweist, die einen Phasenschieber (56) zum Verhindern einer Oszillation enthält, wobei beim Schritt (b) die empfangene und verstärkte Funkwelle mittlerer Frequenz von der Verstärkungseinheit (2) durch den ersten Koppler (3-1) zum existierenden Verteilungskabel (5) oder zum verteilenden leitenden Rohr gekoppelt wird.

13. Verfahren zum Sorgen für ein Senden bzw. Übertragen und ein Zurückstrahlen in Tunnels und ähnlichem einer Funkwelle mittlerer Frequenz, welches Verfahren die folgenden Schritte aufweist:
(a) Empfangen einer amplitudenmodulierten Funkwelle mittlerer Frequenz durch eine an einem oberen Teil von oberirdischen Einrichtungen außerhalb des Tunnels (33) installierte Empfangsantenne;
(b) Koppeln der empfangenen Funkwelle mittlerer Frequenz mit einem existieren Verteilungskabel (24) oder einem verteilenden leitenden Rohr durch einen ersten Koppler (23-1) für die Funkwelle, wobei die erste Verdrahtung oder das erste Rohr (24) in einer schleifenartigen Schaltung (24) angepaßt ist;
(c) Übertragen der Funkwelle entlang dem Verteilungskabel (24) oder dem verteilenden Rohr zu einer vorbestimmten unterirdischen Einrichtung;
(d) Zuführen der übertragenen Funkwelle über einen zweiten Koppler (32-2) einer Zuführeinrichtung (23-2, 22-2, 31, 32) bei der vorbestimmten oberirdischen Einrichtung zu einer existierenden linearen Verdrahtung (34) oder einem leitenden Rohr, die bzw. das innerhalb des Tunnels (33) angeordnet ist, von den vorbestimmten oberirdischen Einrichtungen; und
(e) Zurückstrahlen der Funkwelle mittlerer Frequenz von der existierenden linearen Verdrahtung (34) oder dem leitenden Rohr zum Ermöglichen, ein amplitudenmoduliertes Rundfunkprogramm mittlerer Frequenz innerhalb des Tunnels (33) von den vorbestimmten unterirdischen Einrichtungen zu hören.

14. Verfahren nach Anspruch 13, wobei die Koppler (23-1, 23-2) Ferritkerne (10-1, 10-2) aufweisen, die eine primäre Leitung (8) und eine sekundäre Leitung (9) dazwischen halten.

15. Verfahren nach Anspruch 13, das die folgenden Schritte aufweist:
nach dem Schritt (a) Verstärken der Funkwelle mittlerer Frequenz über eine erste Verstärkungseinheit (22-1), die einen Phasenschieber (56) zum Verhindern einer Oszillation enthält, wobei im Schritt (b) die empfangene und verstärkte Funkwelle mittlerer Frequenz von der ersten Verstärkungseinheit (22-1) durch den ersten Koppler (32-1) mit dem existierenden Verteilungskabel (24) oder dem verteilenden leitenden Rohr gekoppelt wird; und
im Schritt (d) Koppeln der übertragenen Funkwelle über den zweiten Koppler (23-2) der Zuführeinrichtung (23-2, 22-2, 31, 32) bei den vorbestimmten unterirdischen Einrichtungen mit einer zweiten Verstärkungseinheit (22-2), die einen Phasenschieber (56) zum Verhindern einer Oszillation enthält, und Zuführen der übertragenen Funkwelle mittlerer Frequenz von der zweiten Verstärkungseinheit (22-2) zur existierenden linearen Verdrahtung (34) oder zum leitenden Rohr.

16. Verfahren zum Sorgen für ein Senden und ein Zurückstrahlen in Tunnels einer Funkwelle mittlerer Frequenz nach Anspruch 15, wobei der Strom der Funkwelle mittlerer Frequenz, der von der zweiten Verstärkungseinheit (22-2) ausgegeben wird, über einen Kondensator (31) der Zuführeinrichtung (23-2, 22-2, 31, 32) zur linearen Verdrahtung (34) oder zum leitenden Rohr zugeführt wird.

## Revendications

1. Système de transmission radio à ondes hectométriques destiné à rayonner des ondes radio hectométriques dans la plage allant de 100 KHz à 5 MHz à un étage prédéterminé d'un immeuble, comprenant :
(a) une antenne de réception (1) destinée à recevoir une onde radio hectométrique à modulation d'amplitude installlée sur le toit de l'immeuble ;
(b) un câble de distribution (5) ou une canalisation conductrice de distribution ;
(c) une ligne de type en boucle (7-1, 7-2) ;
(d1) un premier coupleur (3-1) destiné à coupler ladite onde radio en provenance de ladite antenne (1) audit câble de distribution (5) ou canalisation conductrice de distribution ;
(d2) une paire de deuxièmes et troisièmes coupleurs (3-2, 3-3 ; 3-4, 3-5) combinée à une ligne d'interconnexion destinée à établir une liaison entre l'onde radio et ladite ligne de type en boucle (7-1, 7-2) ;
dans lequel
(e) ledit câble de distribution (5), ou ladite canalisation conductrice de distribution, est conçu sous la forme d'un circuit de type en boucle (5) de sorte que ladite onde radio couplée est transmise audit étage prédéterminé, et l'onde radio est de nouveau rayonnée de la ligne de type en boucle (7-1, 7-2) au niveau de l'étage prédéterminé.

2. Système de transmission radio à ondes hectométriques selon la revendication 1, dans lequel une pluralité desdites paires de deuxièmes et troisièmes coupleurs (3-2, 3-3 ; 3-4, 3-5) relie respectivement l'onde radio hectométrique à modulation d'amplitude à une pluralité desdites lignes de type en boucle (7-1, 7-2).

3. Système de transmission radio à ondes hectométriques selon les revendications 1 et 2, dans lequel chacun desdits coupleurs (3-2, 3-3 ; 3-4, 3-5) comprend des noyaux en ferrite tenant entre eux une ligne primaire (8) et une ligne secondaire (9).

4. Système de transmission radio à ondes hectométriques selon les revendications 1 à 3, comprenant un préamplificateur d'antenne (2) destiné à amplifier ladite onde radio hectométrique reçue et à coupler ladite onde radio hectométrique reçue et amplifiée audit câble de distribution (5), ou canalisation conductrice de distribution, ledit préamplificateur d'antenne comprenant au moins un moyen de compensation de phase (56) d'une onde radio hectométrique à modulation d'amplitude servant à empêcher toute oscillation.

5. Système de transmission radio à ondes hectométriques destiné à rayonner des ondes radio hectométriques dans la plage allant de 100. KHz à 5 MHz à l'intérieur d'un tunnel (33), comprenant :
(a) une antenne de réception (21) destinée à recevoir une onde radio hectométrique à modulation d'amplitude, installée sur une partie supérieure d'installations au sol situées à l'extérieur dudit tunnel (33) ;
(b) un premier câblage (24) ou canalisation ;
(c) un premier coupleur (23-1) destiné à coupler ladite onde radio en provenance de ladite antenne (21) audit premier câblage (24) ou canalisation ;
(d) un deuxième câblage linéaire (34), ou canalisation, disposé à l'intérieur dudit tunnel (33) des installations enterrées prédéterminées ;
(e) des moyens d'alimentation (23-2, 22-2, 31, 32) comprenant un deuxième coupleur (23-2) destinés à alimenter avec l'onde radio en provenance du premier câblage (24), ou canalisation, ledit deuxième câblage linéaire ou canalisation (34) ;
dans lequel
(f) ledit premier câblage ou canalisation (24) est conçu sous la forme d'un circuit de type en boucle de sorte que l'onde radio reçue est transmise auxdites installations enterrées prédéterminées, et ledit deuxième câblage ou canalisation (34) est conçu sous la forme d'une antenne rayonnante de sorte que l'onde radio reçue est de nouveau rayonnée à l'intérieur dudit tunnel (33).

6. Système de transmission radio à ondes hectométriques selon la revendication 5, dans lequel ledit deuxième câblage linéaire (34), ou canalisation, est actif, et l'alimentation en courant d'ondes radio se fait via un condensateur (31).

7. Système de transmission radio à ondes hectométriques selon la revendication 5, dans lequel ledit deuxième câblage linéaire (34), ou canalisation, n'est pas actif, et l'alimentation en courant d'ondes radio se fait directement (32).

8. Système de transmission radio à ondes hectométriques selon les revendications 5 à 7, dans lequel lesdits premier et deuxième coupleurs (32-1, 32-2) sont constitués de noyaux en ferrite tenant entre eux une ligne primaire (8) et une ligne secondaire (9).

9. Système de transmission radio à ondes hectométriques selon la revendication 5, comprenant un premier préamplificateur d'antenne (22-1) comportant un compensateur de phase (56) servant à empêcher toute oscillation, destiné à amplifier ladite onde radio hectométrique reçue, dans lequel ledit premier coupleur (32-1) couple ladite onde radio hectométrique à amplification d'amplitude reçue en provenance dudit premier préamplificateur d'antenne (22-1) audit premier câblage (24) ou canalisation ;
ledit deuxième coupleur (23-2) desdits moyens d'alimentation (23-2, 22-2, 31, 32) alimentant avec l'onde radio hectométrique transmise en provenance dudit premier câblage (24), ou canalisation, un deuxième préamplificateur d'antenne (22-2) ; et
ledit deuxième préamplificateur d'antenne (22-2) comprenant un compensateur de phase (56) servant à empêcher toute oscillation, et étant destiné à amplifier ladite onde radio hectométrique transmise, et à alimenter avec l'onde radio hectométrique amplifiée ledit câblage linéaire existant (34) ou canalisation conductrice.

10. Procédé permettant la transmission d'ondes radio hectométriques et leur rayonnement ré-émis dans des immeubles existants et analogues, comprenant les étapes consistant à :
(a) recevoir une onde radio hectométrique à modulation d'amplitude par une antenne de réception installée sur le toit d'un immeuble existant ;
(b) coupler l'onde radio hectométrique reçue à un câble de distribution existant (5), ou à une canalisation conductrice de distribution, par un premier coupleur (3-1) de ladite onde radio ;
(c) transmettre l'onde radio le long dudit câble de distribution (5), ou de ladite canalisation conductrice de distribution, à un étage prédéterminé, ledit câble de distribution (5), ou canalisation conductrice de distribution, étant conçu sous la forme d'un circuit de type en boucle (5),
(d) établir une liaison entre l'onde radio transmise à l'étage prédéterminé et une ligne de type en boucle nouvelle ou existante (7-1 ou 7-2) via une paire de coupleurs composée d'un deuxième coupleur (3-2 ou 3-4) et d'un troisième coupleur (3-3 ou 3-5) combinés à une ligne d'interconnexion à l'étage prédéterminé ; et
(e) rayonner de nouveau ladite onde radio hectométrique depuis la ligne de type en boucle (7-1 ou 7-2) afin de permettre l'écoute d'un programme de radiodiffusion à ondes hectométriques à modulation d'amplitude dans une zone de diffusion cible de l'étage prédéterminé.

11. Procédé selon la revendication 10, dans lequel lesdits coupleurs (3-1 ; 3-2, 3-3 ; 3-4, 3-5) comprennent des noyaux en ferrite (10-1, 10-2) tenant entre eux une ligne primaire (8) et une ligne secondaire (9).

12. Procédé selon la revendication 10, comprenant, après ladite étape (a), une étape consistant à amplifier ladite onde radio hectométrique via un préamplificateur d'antenne (2) comprenant un compensateur de phase (56) servant à empêcher toute oscillation, dans lequel, à ladite étape (b), ladite onde radio hectométrique reçue et amplifiée en provenance dudit préamplificateur d'antenne (2) est couplée audit câble de distribution existant (5) ou à ladite canalisation conductrice de distribution par ledit premier coupleur (3-1).

13. Procédé permettant la transmission d'ondes radio hectométriques et leur rayonnement ré-émis dans des tunnels et analogues, comprenant les étapes consistant à :
(a) recevoir une onde radio hectométrique à modulation d'amplitude par une antenne de réception installée sur une partie supérieure d'installations au sol situées à l'extérieur dudit tunnel (33) ;
(b) coupler l'onde radio hectométrique reçue à un câble de distribution existant (24), ou à une canalisation conductrice de distribution, par un premier coupleur (23-1) de ladite onde radio, ledit premier câblage ou canalisation (24) étant conçu sous la forme d'un circuit de type en boucle (24) ;
(c) transmettre l'onde radio le long dudit câble de distribution (24) ou de ladite canalisation de distribution à des installations enterrées prédéterminées,
(d) alimenter avec l'onde radio transmise via un deuxième coupleur (32-2) de moyens d'alimentation (23-2, 22-2, 31, 32) situés au niveau des installations au sol prédéterminées un câblage linéaire existant (34), ou canalisation conductrice, disposé à l'intérieur dudit tunnel (33) des installations au sol prédéterminées ; et
(e) rayonner de nouveau ladite onde radio hectométrique depuis ledit câblage linéaire existant (34), ou canalisation conductrice, afin de permettre l'écoute d'un programme de radiodiffusion à ondes hectométriques à modulation d'amplitude à l'intérieur du tunnel (33) des installations au sol prédéterminées.

14. Procédé selon la revendication 13, dans lequel lesdits coupleurs (23-1, 23-2) comprennent des noyaux en ferrite (10-1, 10-2) tenant entre eux une ligne primaire (8) et une ligne secondaire (9).

15. Procédé selon la revendication 13, comprenant les étapes suivantes consistant à :
après ladite étape (a), amplifier ladite onde radio hectométrique via un premier préamplificateur (22-1) comprenant un compensateur de phase (56) servant à empêcher toute oscillation, dans lequel à ladite étape (b), ladite onde radio hectométrique reçue et amplifiée en provenance dudit préamplificateur d'antenne (22-1) est couplée audit câble de distribution existant (24), ou canalisation conductrice de distribution, par ledit premier coupleur (32-1) ; et
à ladite étape (d), coupler l'onde radio transmise via ledit deuxième coupleur (23-2) desdits moyens d'alimentation (23-2, 22-2, 31, 32) au niveau des installations enterrées prédéterminées à un deuxième préamplificateur d'antenne (22-2) comprenant un compensateur de phase (56) servant à empêcher toute oscillation, et alimenter avec l'onde radio hectométrique transmise en provenance dudit deuxième préamplificateur d'antenne (22-2) ledit câblage linéaire existant (34), ou canalisation conductrice.

16. Procédé permettant la transmission d'ondes radio hectométriques et leur rayonnement ré-émis dans des tunnels selon la revendication 15, dans lequel ledit courant d'ondes radio hectométriques de sortie en provenance dudit deuxième préamplificateur d'antenne (22-2) alimente ledit câblage linéaire (34), ou canalisation conductrice, via un condensateur (31) desdits moyens d'alimentation (23-2, 22-2, 31, 32).
